# EUROPÄISCHE PATENTSCHRIFT

(11) **EP 0 772 832 B1**
(45) Veröffentlichungstag und Bekanntmachung des Hinweises auf die Patenterteilung: **15.04.1998**
(21) Anmeldenummer: 95924169.6
(22) Anmeldetag: 04.07.1995
(51) Int. Cl.: G06F 13/40, G06F 13/36

(54) **ARBITRIERUNG BEI VERZÖGERNDER BUSKOPPLUNG**
ARBITRATION IN CASE OF A RETARDING BUS COUPLING
ARBITRAGE EN CAS DE COUPLAGE DE BUS RETARDATEUR

(30) Priorität: 22.07.1994 DE 4426123
(43) Veröffentlichungstag der Anmeldung: 14.05.1997
(73) Patentinhaber: Siemens Nixdorf Informationssysteme AG, 33106 Paderborn (DE)
(72) Erfinder: KLEINEBERG, Michael, D-33165 Lichtenau (DE); ZACHARIAS, Ralph, D-33175 Bad Lippspringe (DE)
(74) Vertreter: Fuchs, Franz-Josef, Dr.-Ing.
(86) Internationale Anmeldenummer: DE9500865
(87) Internationale Veröffentlichungsnummer: WO9603696

(56) Entgegenhaltungen:
- EP-A- 0 384 621
- EP-A- 0 540 001

## Beschreibung

### Technisches Gebiet

Das Verfahren betrifft die Kopplung von Bussystemen mit Arbitrierung.

### Stand der Technik

Bussysteme wie das "Small Computer System Interface" (SCSI) lassen eine Arbitrierung zu, d.h. eine dynamische prioritätsgesteuerte Busbelegung durch jedes angeschlossene Gerät. Durch die vorgegebenen Reaktionszeiten ist die Länge dieses Bussystems beschränkt. Zwar sind Buskoppler möglich, die zwei kurze Bussegmente zum Beispiel über eine optische Verbindung störsicher verbinden; durch die Laufzeit der Signale sind jedoch auch diese Verbindungen in ihrer Länge auf wenige Meter beschränkt, obwohl die optische Verbindung Entfernunaen im Bereich von Kilometern zuließe.

In der europäischen Patentanmeldung EP-A-540 001 ist ein Buskopplungssystem zum Verbinden zweier Bussegmente über größere Distanzen beschrieben, welches jedoch nur unsymmetrisch betreibbar ist und daher nicht auf beiden Bussystemen vollständig transparent koppelt.

Aufgabe der Erfindung ist es daher, eine Buskopplung bereitzustellten, die zwei Bussegmente transparent, d.h. unter vollständiger Befolgung der vorgeschriebenen Protokolle, koppelt und auch bei großen Laufzeiten auf der Verbindung eine sichere Arbitrierung erlaubt.

### Darstellung der Erfindung

Die Erfindung beruht auf der Beobachtung, daß arbitrierende Bussysteme einen Abbruch des Arbitrierungsablaufs zulassen. Die beiden, zwei Bussegmente koppelnde Koppeleinheiten übermitteln einander bei Bedarf die Arbitrierungsberechtigung. Wird auf einem Bussegment eine Arbitrierung versucht, dessen Koppeleinheit die Arbitrierungsberechtigung hat, so wird die Arbitrierung normal durchgeführt. Besitzt die Koppeleinheit die Berechtigung nicht, so fordert sie sie von der anderen Koppeleinheit an und bricht gleichzeitig die Arbitrierung ab. Das Gerät, welches den Buszugriff versucht hat, wiederholt diesen Versuch nach kurzer Zeit. War das entfernte Bussegment untätig, so gibt die entfernte Koppeleinheit sofort die Arbitrierungsberechtigung ab; diese liegt dann beim nächsten Versuch des den Zugriff versuchenden Geräts vor. War es tätig, so ist über die Buskopplung auch das hiesige Segement tätig; und das Gerät wiederholt den Zugriffsversuch, nachdem der Bus untätig (frei) geworden ist.

### Kurzbeschreibung der Zeichnungen

Es zeigen
- Fig. 1: die Anordnung von zwei Bussegmenten mit zugehörigen Kopplern und drei Geräten,
- Fig. 2: eine schematische Schaltung für einen Koppler,
- Fig. 3: den Ablauf bei der erfindungsgemäßen Arbitrierung.

### Detaillierte Beschreibung der Erfindung

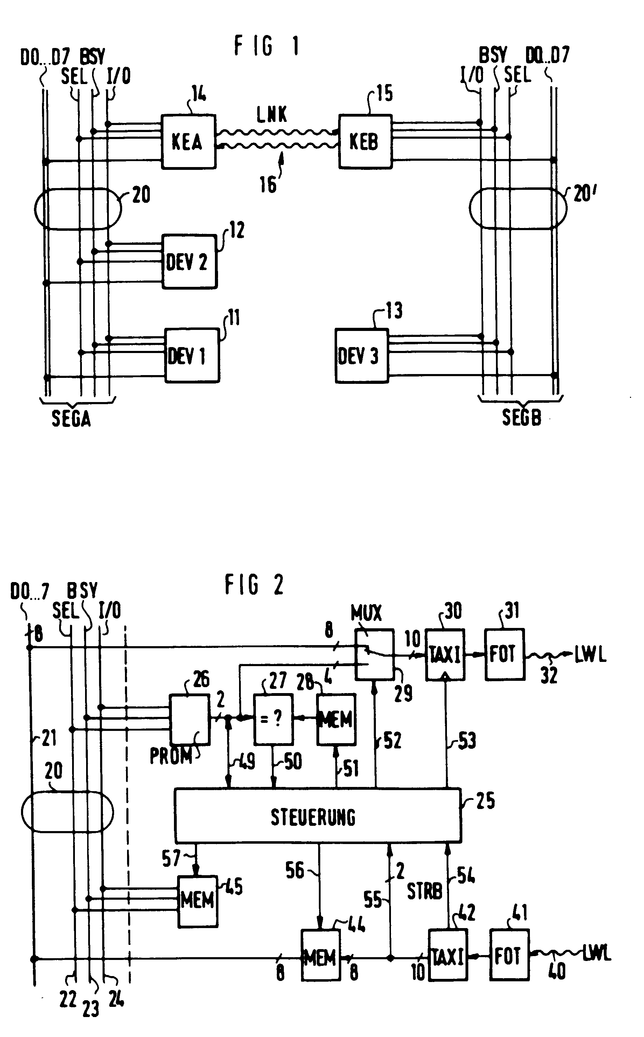

In Fig. 1 wird die Struktur einer Buskopplung skizziert. Zwei Koppeleinheiten KEA und KEB sind über eine Verbindung LNK miteinander verbunden, deren Ausführung weiter unten erläutert wird. SEGA und SEGB sind zwei Bussegmente, die durch die Koppeleinheiten KEA und KEB verbunden sind. Am Segment SEGA sind zwei Geräte DEV1 und DEV2 angeschlossen; am Segment SEGB ist ein Gerät DEV3 angeschlossen. Weitere Geräte werden in ähnlicher Weise angeschlossen. Von den Bussegmenten sind nur die im folgenden wichtigen Datenleitungen D0..D8 und die Steuerleitungen SEL, BSY und I/O dargestellt. Weitere Steuerleitungen sind vorhanden, aber für die Erfindung ohne Bedeutung und daher aus Gründen der Übersichtlichkeit nicht dargestellt.

Eine Verbindung von zwei Geräten am selben Segement, z.B. von DEV1 nach DEV2, erfolgt, ohne daß die Koppler KEA und KEB zur Übertragung der Nutzdaten benötigt werden. Eine Verbindung zwischen den Segmenten, z.B. von DEV1 nach DEV3, erfordert die Koppler für die Übertragung der Nutzdaten. Auch im ersteren Fall erfolgt jedoch eine Übertragung des Status; die Übertragung der Nutzdaten ist der Einfachheit halber üblich und ohne Nachteile. Es wird für die folgende Beschreibung als Bussystem das "Small Computer System Interconnect", SCSI, verwendet, das beispielsweise in dem ANSI-Standard X3.131-1986 beschrieben und im folgenden als bekannt vorausgesetzt wird.

Der SCSI-Bus kann bis zu acht verschiede Geräte betreiben, denen während der Arbitrierung eine der acht Datenleitungen D0..D7 zugeordnet ist. Die Datenleitungen werden durch Treiber mit offenem Kollektor betrieben, so daß eine geschaltete Veroderung der Signale auf dem Bus erfolgt und zulässig ist. Die mögliche zusätzliche Datenleitung für ein Paritätsbit wird in diesem Beispiel nicht benutzt.

Weiterhin sind Signalleitungen BSY, SEL und I/O vorhanden. In der SCSI-Spezifikation sind weitere Steuerleitungen genannt, für die stellvertretend die Steuerleitung I/O dargestellt ist. Für die Arbitrierung sind nur die Signale SEL und BSY von Bedeutung. Auch diese Signale werden über Treiber mit offenem Kollekter in geschalteter Veroderung betrieben. Die Steuerleitungen können die beiden digitalen Zustände L oder "negated" und H oder "asserted" annehmen. Die verschiednen zulässigen Kombination der Zustände der Steuerleitungen werden als Buszustände bezeichnet.

Der Ruhezustand des Bussystems wird dadurch signalisiert, daß die Signale SEL und BSY beide L sind. Das Gerät DEV1 fordert die Busbenutzung durch eine Arbitrierungszyklus an, indem es das Signal BSY auf H setzt und gleichzeitig das seiner Adresse entsprechende Bit auf den Datenleitungen aktiviert. Nach einer festen, vorbestimmten Wartezeit, der "arbitration delay" von 2,2 µs, prüft das Gerät, ob ein Bit mit höherer Nummer aktiviert ist oder das selbst gesetzte Bit dasjenige der höchsten Nummer ist. Im ersten Fall hat ein Gerät höherer Priorität die Steuerung übernommen, im letzteren Fall gehört die Steuerberechtigung dem anfordernden Gerät. Das Gerät mit der Steuerberechtigung setzt das Signal SEL auf H und übernimmt die Steuerung des Bussystems. Damit ist die Arbitrierung beendet; es folgen Buszustände für den Datentransfer, die durch Übergang in den Ruhezustand IDLE abgeschlossen werden. Durch Setzen des Signals I/O und der weiteren Signale werden die Buszustände für den Datentransfer gesetzt und es wird mit Hilfe der Datenleitungen in bekannter Art eine Datenübertragung durchgeführt. Das Arbitrierungsverfahren stellt damit sicher, daß immer nur ein Gerät zur Zeit die Steuerungsfunktion des Busses übernimmt. Das andere Gerät wartet, bis der Ruhezustand wieder erreicht ist, und versucht dann erneut, durch einen Arbitrierungszyklus die Steuerberechtigung zu erwerben.

Die Koppler KEA überwachen kontinuierlich den Buszustand an dem ihnen zugeordneten Bus. Die Aktivierung von BSY durch das Gerät DEV1 wird erkannt. Daraufhin wird über die Verbindung LNK eine Nachricht an den entfernten Koppler KEB geschickt, die den neuen Buszustand und den Zustand der Datenleitungen enthält. Die entfernte Koppeleinheit KEB schaltet nun ihrerseits, sozusagen in Vertretung für das Gerät DEV1, den neuen Buszustand und setzt die Datenleitungen. Sofern zufällig gleichzeitig auf dem entfernten Bussegment SEGB das Gerät DEV3 den Bus zu belegen versucht, erkennt dies die entfernte Koppeleinheit und schickt eine Nachricht an die Koppeleinheit KEA, welche ihrerseits auf dem Bussegment SEGA denselben Zustand wie auf dem Bussegment SEGB erzeugt und so das Gerät DEV1 daran hindert, den Bus zu belegen. Es ist klar, daß der Nachrichtenaustausch zwischen den Kopplern KEA und KEB so schnell erfolgen muß, daß innerhalb der vorgegebenen Zeitschranke von 2,4 µs zumindest eine Nachricht hin- und eine zweite zurückgeschickt werden kann. Vorgeschriebene Protokoll- und Beruhigungszeiten verkürzen diese Intervall weiter. Damit ist die Laufzeit der Verbindung auf weniger als 200 ns beschränkt. Leitungsgebundene elektromagnetische Wellen wie auch Lichtleiter haben eine Verzögerungszeit von mehr als 5 µs pro Kilometer, so daß nach dem Stand der Technik eine Verbindung über 25m Länge nicht möglich ist.

In den nachfolgenden Datentransferphasen wird in gleicher Art von den Kopplern KEA und KEB jede Änderung des Buszustands erfaßt, über eine Nachricht dem jeweiligen anderen Koppler zugeleitet und von diesem auf den auf an ihn angeschlossen Bus gelegt.

Eine Schaltung für einen Koppler ist in Fig. 2 schematisch dargestellt. Die Nachrichtenübertragung erfolgt über Lichtleiter 32, 40, deren Lichtsignale über optische Receiver 41 und Transmitter 31 des Typs V23804-E2-T5 und V23800-S2-T5 der Firma Siemens in elektrische Signale umgesetzt und von als "TAXI Chip" bezeichneten Seriell-Parallel-Wandlern 30, 42 der Fa. AMD des Typs AM 79168 und AM 79169 umgewandelt. Mit diesen Bauelementen kann jeder der beiden Koppler dem anderen Koppler eine zehn Bit breite Nachricht im Voll-Duplex-Betrieb übermitteln.

Die Steuerung 25 überwacht den Zustand des durch die Signalleitungen SEL, BSY und I/O angezeigten Zustandes des gesteuerten Busses 20, indem diese durch einen Umsetzer 26 codiert und in dem Vergleicher 27 mit dem bislang gültigen, im Speicher 28 gespeicherten Zustand verglichen wird. Bei Ungleichheit wird die Zustandsnummer über die Verbindung 49 gelesen und über die Verbindung 51 in den Vergleichsspeicher geschrieben. Zugleich wird über die Verbindung 52 zwischen Steuerung 25 und einem Multiplexer diese neue Zustandnummer an den Dateneingang des Sende-TAXI 30 gelegt, welcher anschließend durch einen Strobe 53 zum Senden des Zustands veranlaßt wird. Unmittelbar danach wird der Multiplexer 29 zurückgeschaltet und durch einen zweiten Strobe zum Sende-TAXI auch der Wert der Datensignale übermittelt. Dabei wird das 10-te Bit durch den Multiplexer so verdrahtet, daß es bei Datensignalen auf L und bei Statusnummern auf H liegt.

Auf der Empfangsseite werden die seriellen Signale im Empfangs-TAXI 42 parallel bereitgestellt und über einen Strobe 54 der Steuerung gemeldet, welche diese über die Verbindung 55 auswerten kann. Ist das 10-te Bit auf H, so liegt ein geänderter Status vor; dieser wird intern von der Steuerung gespeichert und über die Verbindung 57 ein einen Speicher 45 eingeschrieben und setzt die neuen Statussignale. Ist das 10-te Bit L, so liegt ein Datenwort vor, welches über das Strobe-Signal 56 in den Speicher 44 übernommen und von dort auf den Datenbus 21 geschaltet. Dabei enscheidet das festgelegte Busprotokoll, ob, wie beschrieben, zunächst der neue Status und dann die neuen Daten oder umgekehrt, zunächst die neuen Daten und dann der neue Status aktiviert wird.

Es sind also zwei Arten von Nachrichten, die von den Koppeleinheiten ausgetauscht werden: Datennachrichten, die einen geänderten Zustand des Datenbusses enthalten; und Zustandsnachrichten, die einen genänderten Buszustand bezeichnen. Da die Anzahl der Buszustände weit unterhalb der Anzahl der Datenzustände liegt, werden nicht alle Codierungsmöglichkeiten für Zustandsnachrichten ausgeschöpft.

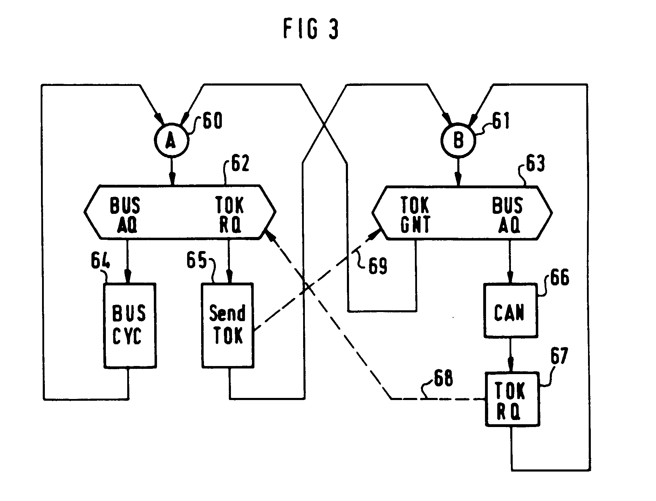

Diese bislang beschriebenen Vorgänge sind für jede Buskopplung, also auch die nach dem Stand der Technik, zutreffend. Die Erfindung besteht in einem Verhalten der Steuerung, mit welcher diese anhand der Statusänderungen tätig wird. Der Ablauf ist in Fig. 3 dargestellt, soweit die Erfindung betroffen ist.

Jede Steuerung befindet sich entweder im Zustand A, in welchem sie die Arbitrierungsberechtigung hat, oder im Zustand B, in dem sie die Arbitrierungsberechtigung nicht hat. Im Schritt 62 wartet eine Steuerung mit Arbitrierungberechtigung auf eines von zwei Ereignissen, nämlich entweder eine Zustandsänderung auf dem Bus, die einen Arbitrierungszyklus beginnt; als BUS AQ bezeichnet und als Zustandswechsel über die Verbindungen 50 und 49 erlangt. Alternativ kann auch über die Verbindungen 54 und 55 von dem Empfangs-TAXI eine Nachricht TOK RQ eintreffen. Im ersteren Fall (BUS AQ) wird im Schritt BUS CYC, 64, ein normaler Buszyklus abgewickelt und die dazugehörigen Daten werden über die Verbindung verschickt. Im zweiten Fall hat ein Gerät an dem mit der Gegenstelle verbundenen Bus einen Arbitrierungszyklus begonnen und, wie weiter unten dargestellt und durch einen gestrichelten Pfeil 68 dargestellt, eine Nachricht TOK-RQ geschickt. Diese Nachricht gehört nicht zu der Menge der zulässigen Zustandswechsel, sondern ist der Menge der noch nicht ausgeschöpften Codierungsmöglichkeiten entnommen. Die Steuerung erkennt dies und schaltet den Dateninhalt weder auf die Steuerleitungen noch auf den Datenbus, sonderen verwertet die Nachricht lediglich intern. Als Reaktion hierauf erzeugt die Steuerung ihrerseits eine Nachricht TOK GNT, schaltet den Multiplexer 29 entsprechend und sendet diese Nachricht an die Gegenstelle. Auch diese Nachricht ist der Menge der noch nicht ausgeschöpften Codierungsmöglichkeiten entnommen. Da die Steuerung keine Arbitrierungsberechtigung mehr besitzt, geht sie in den Zustand B, 61, ohne Arbitrierungsberechtigung über.

Dies ist der Zustand, in dem sich die Gegenstelle befand und im Schritt 63 auf eines von zwei Ereignissen wartete. Mit dem Eintreffen der durch eine gestrichelten Pfeiles 69 dargestellten Nachricht TOK GNT erhält die Steuerung die Arbitrierungsberechtigung und geht in den Zustand A, 60, mit Arbitrierungsberechtigung über. Die dann möglichen Zustandswechsel sind bereits beschrieben.

Alternativ zum Eintreffen der Nachricht TOK GNT kann bei einer Station ohne Arbitrierungsberechtigung auch ein Gerät am eigenen Bus einen Arbitrierungszyklus beginnen. Dies stellt die Steuerung in besagter Weise fest. Durch Setzen der Steuerleitungen über die Verbindung 57 und den Speicher-Treiber 45 wird, wie noch genauer beschrieben, der Arbitrierungszyklus abgebrochen. Gleichzeitig sendet die Steuerung, wie durch die gestrichelte Linie 68 angedeutet, im Schritt 67 eine Token-Anfrage TOK RQ an die entfernte Steuerung in derselben Art wie die Token-Abgabe. Bis zum Empfang der Nachricht TOK GNT bleibt die Steuerung im Zustand B, 61. Der Empfang der Token-Anfrage TOK RQ wird von der Gegenstelle wie oben beschrieben bearbeitet. Tritt bei einer Steuerung eine Token-Anfrage ein, während ein Buszyklus 64 durchgeführt wird, so wird diese Anfrage solange gespeichert, bis der Bus an der Steuerung im Ruhezustand ist, und dann erst die Berechtigung abgegeben. Entsprechend bricht die Station ohne Arbitrierungsberechtigung solange Buszyklen ab, bis die Token-Nachricht eingetroffen ist.

Das Abbrechen einer Arbitrierung ist durch frühzeitiges Setzen des Signals SEL innerhalb der "bus clear delay" von 800ns möglich. Da dieser Vorgang von der Koppeleinheit an Hand des eigenen Status entschieden werden kann, kann er unabhängig von der Laufzeit auf den Übermittlungsleitungen immer rechtzeitig erfolgen.

In der beschriebenen Kopplung wird auch bei einer Kommunikation zweier Geräte am demselben Bussegment der Busszustand auf dem entfernten Bussegment erzeugt, obwohl die dort angeschlossenen Geräte die Daten nicht auswerten. Dies ist notwendig, damit die Geräte auf dem entfernten Busssegment keine Arbitrierungszyklen einleiten. Bei einem SCSI-Bus, bei dem während der Arbitrierung die Zieladresse nicht bekannt ist und ein Abbruch nach der Arbitrierung nicht möglich ist, ist dies auch unvermeidlich.

In anderen Bussystemen, bei denen während der Arbitrierung auch die Zieladresse enthalten ist, kann jede Koppeleinheit so ausgebildet werden, daß sie eine, möglicherweise dynamisch aufgebaute, Tabelle der an ihrem Bussegment angeschlossenen Geräteadressen enthält und bei Verbindungen, die auf dem Bussegment lokal abwickelbar sind, diese nicht während der Arbitrierungsphase abbricht. Ist die Zieladress nicht in dieser Tabelle und hat der Koppler nicht die Arbitrierungsberechtigung, bricht er die Arbitrierung ab und fordert die Berechtigung in beschriebener Weise an.

Anstelle der beschriebenen 10 Bit breiten Nachrichtenübermittlung kann beispielsweise auch eine 16 Bit breite Übermittlung verwendet werden, bei der gleichzeitig Daten und Zustand übermittelt werden. In diesem Fall würde bei 8 Bit Daten und 1 Bit Parität für die Daten 7 Bit für den Zustand bleiben. Im Falle der beiden Nachrichten TOK RQ und TOK GNT ignoriert dann die Steuerung den Datenteil.

Als Kopplung ist anstelle einer Punkt-zu-Punkt-Verbindung auch ein Bussystem mit mehreren Teilnehmern möglich. Dabei ist dann durch die Adressierung in diesem Bussystem der Anforderer eines TOK RQ bekannt. An diesen wird dann das TOK GNT geschickt. Insbesondere das fiberoptische System FDDI ist wegen der hohen Übertragungsrate und garantierten übermittlungszeit besonders geeignet.

Weiterhin kann die Erfindung eingesetzt werden, wenn die Übermittlungszeit auf der die Koppler verbindenden Einrichtung nicht bekannt ist. Dies ist beispielsweise der Fall, wenn die Kopplung über Ethernet bzw. IEEE 802.3 erfolgt. Bei der Nachrichtenübermittlung über Ethernet beispielsweise kann durch Kollisionen auf dem Netzwerk ein weiterer Sendeversuche notwendig sein, bis eine Nachricht zu der entfernten Koppeleinheit abgesendet werden kann. Damit erlaubt die Erfindung auch eine Kopplung von SCSI-Bussystemen über eine Ethernet-Verbindung, die wegen der genannten Eigenschaft bislang gar nicht möglich war.

Damit erlaubt die Erfindung auch die Verbindung von drei oder mehr Bussegmenten. Nur einer der Koppler hat die Arbitrierungsberechtigung. Entweder wird die Rundruf-Eigenschaft ("broadcast") des Netzwerks verwendet, um die Anforderung an alle anderen Koppler gleichzeitig zu senden. Oder ein die Berechtigung abgebender Koppler sendet den anderen Kopplern eine dritte Nachricht, daß die Berechtigung an einen anderen Koppler übergegangen ist.

Die Erfindung wurde an Hand des SCSI Bussystems beschrieben, bei dem häufig auf eine Arbitrierungsphase ein dergegenüber langer Datentransferphase folgt, während derer das sendende Gerät den Bus nicht freigibt. Während der Datenübertragungsphase wird eine durch konkurrierende Zugriffsversuche nicht gestörte Verbindung erwartet. Diese Betrachtung gilt in gleicher Art für andere Bussysteme wie Multibus II oder VME Bus, die gleichfalls eine Arbitrierung vorsehen und deren Abbruch zulassen. Auch das I²L System, bei dem eine Abitrierung während der Adressphase stattfindet, kann durch die Erfindung gekoppelt werden.

Es ist ferner denkbar, daß die zu verbindenden Bussysteme nicht gleich sind, aber während der Arbitrierung abbrechbar sind. Eine der beiden Koppeleinheiten muß dann eine Protokollwandlung durchführen. Dies kann erfolgen, indem zu jedem Buszustand des ersten der korrespondierende Buszustand des zweiten Bussystems in einer Tabelle niedergelegt ist und die wandelnde Koppeleinheit die Zustände nach dieser Tabelle in bekannter Programmiertechnik umsetzt. Insbesondere ist so eine Verbindung von SCSI-I mit 8-Bit Datenbreite nach SCSI-II mit 16-Bit Datenbreite möglich.

## Patentansprüche

1. Betriebsverfahren für die Kopplung von Bussegmenten durch an je ein Bussegment angeschlosse, untereinander verbundene Koppeleinheiten mit folgenden Merkmalen:
- Die Koppeleinheiten (14, 15) sind im wesentlichen gleichartig,
- die Bussegmente (SEGA, 20, SEGB, 20') benutzen jeweils ein Arbitrierungsverfahren;
- das jeweilige Arbitrierungsverfahren erlaubt einen Abbruch (CAN, 66) durch die jeweilige Koppeleinheit, ohne daß hierzu die Koppeleinheit die Kontrolle über das an sie angeschlossene Bussegment erhält;
- höchstens eine der Koppeleinheiten hat einen die Arbitrierung berechtigenden Zustand A (60), während alle anderen einen die Arbitrierung nicht berechtigenden Zustand B (61) haben;
- befindet sich eine Koppeleinheit in dem zur Arbitrierung nicht berechtigenden Zustand B, so bricht sie von sich aus alle Arbitrierungen auf dem an sie angeschlossenen Bussegment ab, ohne hierzu Kontrolle über eben dieses Bussegment zu erhalten, und sendet mindestens eine Anforderung (TOK RQ) mindestens an die in dem zur Arbitrierung berechtigenden Zustand A befindliche Koppeleinheit;
- empfängt eine in dem zur Arbitrierung berechtigenden Zustand A befindliche Koppeleinheit eine Anforderung (TOK RQ), so sendet sie eine Berechtigung (TOK GNT) an die anfordernde Koppeleinheit und geht gleichzeitig in den zur Arbitrierung nicht berechtigenden Zustand B über, ohne hierbei das an sie angeschlossene Bussegment zu beaufschlagen,
- durch Empfang einer Berechtigung (TOK GNT) geht eine Koppeleinheit in den zur Arbitrierung berechtigenden Zustand A über.

2. Buskopplung nach Anspruch 1, wobei die Anforderung (TOK RQ) gegebenenfalls gespeichert wird und die Berechtigung (TOK GNT) erst gesendet wird, wenn auf dem angeschlossenen Bussegment eine Arbitrierung möglich ist.

3. Buskopplung nach Anspruch 2, wobei eine zusätzliche Wartezeit, in der das Bussegment frei ist, vor Abgabe der Berechtigung (TOK GNT) abläuft.

4. Buskopplung nach einem der Ansprüche 1 bis 3, bei der die Bussegmente das "Small Computer System Interface" SCSI verwenden.

5. Buskopplung nach Anspruch 4, wobei der Abbruch der Arbitrierung durch Aktivierung des Selektionssignals (SEL) gemäß der Interface-Spezifikation (SCSI) durch die Koppeleinheit zu Beginn der Arbitrierungsphase, insbesondere vor Ablauf der "Bus Set Delay"-Zeit erfolgt.

6. Buskopplung nach einem der Ansprüche 1 bis 5, wobei zur Verbindung der Koppeleinheiten optische Übermittlung über Glasfaser-Verbindungen verwendet werden.

7. Buskopplung nach Anspruch 6, wobei zur Verbindung der Koppeleinheiten das fiberoptische System FDDI verwendet wird.

8. Buskopplung nach einem der Ansprüche 1 bis 5, wobei zur Verbindung der Koppeleinheiten ein Netzwerk mit konkurrierendem Zugriff (Ethernet) verwendet wird.

9. Buskopplung nach einem der Ansprüche 1 bis 8, wobei mehr als zwei Koppeleinheiten durch ein Netzwerk verbunden sind und die Anforderung als Rundruf ("broadcast") an alle Koppeleinheiten gesendet wird.

10. Buskopplung nach einem der Ansprüche 1 bis 8, wobei mehr als zwei Koppeleinheiten durch ein Netzwerk verbunden sind und die die Berechtigung abgebende Koppeleinheit zusätzlich zu der an die anfordernde Koppeleinheit gesendeten Berechtigung eine Informationsnachricht an die weiteren Koppeleinheiten sendet.

11. Buskopplung nach einem der Ansprüche 1 bis 10, bei der jede Koppeleinheit eine Tabelle der an dem an sie angeschlossenen Bussegment bekannten Geräte hat und die Arbitrierung nicht abbricht, wenn Ziel- und Quelladresse in eben diesem Bussegment liegen.

## Claims

1. Operating method for the coupling of bus segments by means of interconnected coupling units connected to one bus segment each, having the following features:
- the coupling units (14, 15) are essentially similar,
- the bus segments (SEGA, 20, SEGB, 20') respectively use one arbitration procedure;
- the respective arbitration procedure permits interruption (CAN, 66) by the respective coupling unit without the coupling unit for this purpose obtaining control over the bus segment connected to it;
- at most one of the coupling units has a state A (60) authorizing arbitration while all the others have a state B (61) not authorizing arbitration;
- if a coupling unit is in the state B not authorizing arbitration, it itself interrupts all arbitration on the bus segment connected to it without for this purpose obtaining control over just this bus segment, and transmits at least one request (TOK RQ) at least to the coupling unit in the state A authorizing arbitration;
- if a coupling unit in the state A authorizing arbitration receives a request (TOK RQ), it transmits an authority (TOK GNT) to the requesting coupling unit and simultaneously goes over into the state B not authorizing arbitration without acting on the bus segment connected to it in the process,
- a coupling unit goes over into the state A authorizing arbitration by receiving an authorization (TOK GNT).

2. Bus coupling according to Claim 1, in which the request (TOK RQ) is stored if appropriate and the authorization (TOK GNT) is not transmitted until arbitration is possible on the bus segment connected.

3. Bus coupling according to Claim 2, in which an additional waiting time in which the bus segment is free elapses before the authorization (TOK GNT) is issued.

4. Bus coupling according to one of Claims 1 to 3, in which the bus segments use the "Small Computer System Interface" SCSI.

5. Bus coupling according to Claim 4, in which the interruption of arbitration is performed by activating the selection signal (SEL) in accordance with the interface specification (SCSI) by means of the coupling unit at the start of the arbitration phase, in particular before expiry of the bus set delay time.

6. Bus coupling according to one of Claims 1 to 5, in which optical transmission via glass fibre connections is used to connect the coupling units.

7. Bus coupling according to Claim 6, in which the FDDI fibre optic system is used to connect the coupling units.

8. Bus coupling according to one of Claims 1 to 5, in which a network with competing access (Ethernet) is used to connect the coupling units.

9. Bus coupling according to one of Claims 1 to 8, in which more than two coupling units are connected by a network and the request is transmitted to all the coupling units as a broadcast.

10. Bus coupling according to one of Claims 1 to 8, in which more than two coupling units are connected by a network, and in addition to the authorization transmitted to the requesting coupling unit the coupling unit issuing the authorization transmits an information message to the further coupling units.

11. Bus coupling according to one of Claims 1 to 10, in which each coupling unit has a table of the known devices on the bus segment connected to it and does not interrupt arbitration when the destination address and source address are situated in just this bus segment.

## Revendications

1. Procédé pour faire fonctionner la connexion de segments de bus au moyen d'unités de connexion raccordées respectivement à un segment de bus et reliées entre elles, avec les caractéristiques suivantes :
- les unités de connexion (14, 15) sont sensiblement de même type ;
- les segments de bus (SEGA, 20, SEGB, 20') utilisent chacun un procédé d'arbitrage ;
- le procédé d'arbitrage respectif autorise une interruption (CAN, 66) par l'unité de connexion respective sans que l'unité de connexion reçoive à cet effet le contrôle sur le segment de bus qui lui est raccordé ;
- au plus une des unités de connexion a un état A (60) autorisant l'arbitrage, tandis que toutes les autres ont un état B (61) n'autorisant pas l'arbitrage ;
- si une unité de connexion se trouve dans l'état B n'autorisant pas l'arbitrage, elle interrompt d'elle-même tous les arbitrages sur le segment de bus qui lui est raccordé sans recevoir à cet effet le contrôle sur ce même segment de bus et elle envoie au moins une demande (TOK RQ) au moins à l'unité de connexion se trouvant dans l'état A autorisant l'arbitrage ;
- si une unité de connexion se trouvant dans l'état A autorisant l'arbitrage reçoit une demande (TOK RQ), elle envoie une autorisation (TOK GNT) à l'unité de connexion demandante et elle passe en même temps dans l'état B n'autorisant pas l'arbitrage sans charger pour cela le segment de bus qui lui est raccordé ;
- à la réception d'une autorisation (TOK GNT), une unité de connexion passe dans l'état A autorisant l'arbitrage.

2. Procédé selon la revendication 1, selon laquelle la demande (TOK RQ) est mémorisée le cas échéant et l'autorisation (TOK GNT) n'est envoyée que si un arbitrage est possible sur le segment de bus raccordé.

3. Procédé selon la revendication 2, selon laquelle un temps d'attente supplémentaire, pendant lequel le segment de bus est libre, s'écoule avant la délivrance de l'autorisation (TOK GNT).

4. Procédé selon l'une des revendications 1 à 3, selon laquelle les segments de bus utilisent le système de bus SCSI "Small Computer System Interface".

5. Procédé selon la revendication 4, selon laquelle l'interruption de l'arbitrage par l'activation du signal de sélection (SEL) selon la spécification d'interface (SCSI) par l'unité de connexion s'effectue au début de la phase d'arbitrage, notamment avant l'écoulement du temps "Bus Set Delay".

6. Procédé selon l'une des revendications 1 à 5, selon laquelle on utilise pour la liaison des unités de connexion une transmission optique par l'intermédiaire de liaisons à fibres optiques.

7. Procédé selon la revendication 6, selon laquelle on utilise pour la liaison des unités de connexion le système à fibres optiques FDDI.

8. Procédé selon l'une des revendications 1 à 5, selon laquelle on utilise pour la liaison des unités de connexion un réseau à accès concurrentiel (Ethernet).

9. Procédé selon l'une des revendications 1 à 8, selon laquelle plus de deux unités de connexion sont reliées par un réseau et la demande est envoyée par diffusion ("broadcast") à toutes les unités de connexion.

10. Procédé selon l'une des revendications 1 à 8, selon laquelle plus de deux unités de connexion sont reliées par un réseau et l'unité de connexion donnant l'autorisation, en plus de l'autorisation envoyée à l'unité de connexion demandante, envoie une information aux autres unités de connexion.

11. Procédé selon l'une des revendications 1 à 10, selon laquelle chaque unité de connexion a un tableau des appareils connus raccordés au segment de bus qui lui est raccordé et n'interrompt pas l'arbitrage si les adresses de source et de destination se trouvent dans ce même segment de bus.
